# EUROPEAN PATENT SPECIFICATION

(11) **EP 0 600 919 B1**
(45) Date of publication and mention of the grant of the patent: **30.09.1998**
(21) Application number: 92915923.4
(22) Date of filing: 23.07.1992
(51) Int. Cl.: A01M 7/00

(54) **METHOD AND APPARATUS FOR CROP SPRAYING**
VERFAHREN UND VORRICHTUNG ZUM BESPRÜHEN VON KULTUREN
PROCEDE ET APPAREIL DE TRAITEMENT DE CULTURES PAR PULVERISATION

(30) Priority: 06.08.1991 GB 9117101; 28.09.1991 GB 9120681; 12.05.1992 GB 9210208
(43) Date of publication of application: 15.06.1994
(60) Divisional application: 97116450.4
(73) Proprietor: Benest Engineering Limited, Jersey, Channel Islands (GB)
(72) Inventor: BENEST, Roger Sidney, St Lawrence, Jersey (GB)
(74) Representative: Archer, Philip Bruce
(86) International application number: PCT/GB92/01356
(87) International publication number: WO 93/02552

(56) References cited:
- EP-A- 0 077 270
- EP-A- 0 157 592
- WO-A-90/01265
- WO-A-92/00670
- FR-A- 1 019 295
- FR-A- 2 409 003
- GB-A- 2 229 074
- US-A- 1 526 642
- US-A- 2 645 523
- US-A- 4 186 878

## Description

This invention relates to a method and apparatus for boom control applicable to crop spraying and other agricultural and horticultural operations. The present application discloses improvements and modifications of the method and apparatus for crop spraying disclosed in prior International publication number WO92/00670 published on 23.01.92.

It is convenient to summarise here some of the more important aspects of the disclosure in WO92/00670 as follows

### BACKGROUND IN WO92/00670

### ROW FOLLOWING

The droplegs are mounted for lateral floating movement on carriages.

### BOOM HEIGHT AND TILT SENSING

There is mentioned on page 5 of the description the control of boom height and tilt by sensors on the boom which contact the soil surface and operate electrical actuators to level the boom.

For purposes of disclosure I hereby incorporate the entire description and drawings of WO92/00670 into the present application as part of the disclosure thereof.

### THE PRESENT INVENTION

### BOOM HEIGHT AND TILT SENSING

Investigations have shown that an effective system for boom height and tilt control is needed. It is not sufficient to base boom height and tilt control on tractor attitude. One reason for this is that tractor attitude can change almost instantaneously during field operations when, for example, a tractor wheel drops into a rut. Third party prior proposals for boom height and tilt sensing based on non-contact systems such as radar, infra-red or ultrasonic height sensing have proved ineffective due to the variability of the operating conditions caused by the presence of growing crop between the sensor and the ground. In short, it has proved impossible to develop effective height sensing based on such non-contact systems.

Equally however, ground contact sensors as proposed in a general way in WO92/00670 are in practice difficult to implement, particularly with certain row crops such as potatoes, where it is difficult to see where such a ground contact sensor could be located without becoming entangled in the crop (when the crop has grown beyond a certain stage), or without interfering with the function of the spraying droplegs as disclosed in WO92/00670.

According to this aspect of the present invention there is provided a method of controlling the height from the ground of a boom-type implement, and corresponding apparatus as defined in the claims hereof.

In an embodiment, the method and apparatus provides droplegs, generally as disclosed in WO92/00670. Some of the droplegs are employed for spraying purposes, generally as there disclosed. One or more of these droplegs or of an additional but similar dropleg is employed for boom height and/or tilt sensing purposes. Sensing means is associated with the mounting of the relevant one or ones of these sensing droplegs, whereby signals are generated to enable a control system to control the boom height and attitude. An example of such a sensor is a potentiometer.

By using the actual spraying droplegs, or a similar one or ones, there is provided a means of ground-contact height sensing which directly and reliably determines the height of the boom at the location of the dropleg, thereby eliminating the uncertainties of non-contact height sensing systems, and which takes advantage of the crop-penetration systems disclosed in WO92/00670 so that the ground-contact sensor is able to operate reliably and effectively.

By using an actual crop spraying dropleg, this second function of height sensing is conveniently and economically provided without in any way interfering with the crop spraying function of the dropleg.

If, for any reason, it were preferred not to employ a dropleg for both the spraying and height sensing functions, then this can be readily achieved by providing an additional dropleg at either or both of the outer opposite ends of the boom, to perform the height sensing function.

It will be understood that tilt sensing necessarily involves the use of two spaced height sensors at different locations on the boom, and a comparison of their height signals to determine tilt.

### CAM CONTROL OF DROPLEG ATTITUDE

The preferred embodiment also provides cam means for controlling the dropleg attitude. Interengaging cam elements cooperate to preferentially hold the droplegs in a central position in which each dropleg is generally at right angles with respect to the longitudinal axis of the boom. In this position each dropleg senses the height of the boom from the ground directly below it, as measured at 90 degrees to the boom lengthwise axis. This feature is of value in hill-side spraying. If the dropleg were allowed to adopt a vertical attitude in such operations this would adversely affect the height-sensing which the dropleg provides, whereby inconsistencies in boom height control would be produced. This fact arises at least in part from the fact that crops of the kind with which the present invention is concerned, such as potatoes, tend to have a measurable crop maximum height derived from growth generally at right angles to the surface of the land, rather than in a purely vertical direction.

The arrangement of cam elements is such that the dropleg can adopt a folded configuration when the boom is itself in its transport position, and the above-mentioned working position during use. This can be achieved automatically as a result of the turning moment derived from the weight of the dropleg acting on the cam elements. For this purpose spring engagement of the cam elements is chosen so as to act with a force permitting the weight-derived turning moment generated when the boom folds to be sufficient to permit the dropleg to pivot. The cam assembly may be provided with cam elements which define also (and tend to retain) a transport position of the dropleg.

The cam means used for dropleg attitude control are spring-biased. The cams may be provided by smoothly-undulating pairs of wavy washers which are spring-biased into engagement and disposed coaxially with respect to the axis of dropleg pivotal movement.

### DROPLEG BREAKBACK

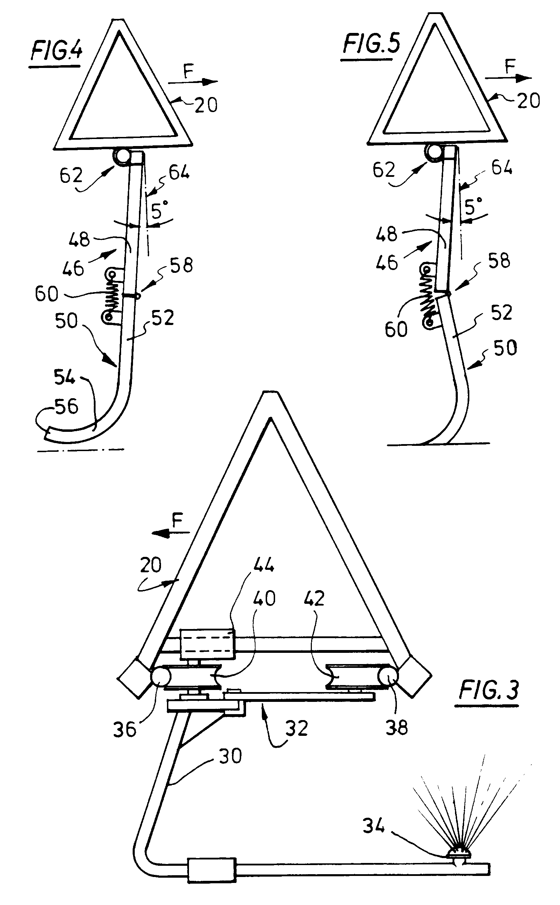

The droplegs used for spraying and/or height and tilt sensing purposes may have a generally trailing attitude with respect to the ground, when travelling in the normal forward direction of travel during spraying operations. Such a trailing attitude is however not essential for the purposes of the proper operation of the droplegs, as can be seen from Fig 3 of the drawings hereof. However, a trailing attitude is preferred, and it has been found that such an attitude tends to cause particular problems with respect to entanglement of the droplegs with the crop, and otherwise, in the event that the boom and its droplegs are driven in the reverse direction by the tractor operator, for any reason.

An embodiment provides means to reduce this problem. It is to be understood that this aspect of the invention is applicable to droplegs regardless of whether they perform a spraying or spreading or height or tilt sensing function, or only one of these.

By providing a breakback facility in the dropleg structure, the risk of damage to the droplegs in the event of accidental or otherwise reverse travel of the spraying apparatus is substantially reduced or eliminated in a very simple manner. By providing for automatic spring-return of the droplegs to their working position, this facility is complemented by, effectively, an automatic re-setting function.

In an embodiment the boom portions have pivot means permitting up and down movement of the boom portions and abutment means at the inner ends of the boom portions whereby they can make direct abutting engagement. The location of the abutment means is such that the up and down movement of one of the boom portions about its pivot causes the transmission of corresponding movement through the abutment means to the other boom portion.

This arrangement produces significant frictional energy losses at the abutment means, and this causes a corresponding damping of the transmitted motion, thus leading to a significant reduction of the boom portions' tendency to oscillate when vertically-directed forces act on them.

In the preferred embodiment, the boom pivots are at a raised location with respect to the abutment means, and are offset laterally outwardly thereof. The pivot means may comprise the main boom hinges, these having their hinge axes extending generally in the fore-aft direction.

By virtue of the cooperation of the boom portions, a single actuator is provided to act directly on one boom portion to tilt same, and this action tilts also the other boom portion by virtue of the transmitted motion.

### SPRAY DIRECTION

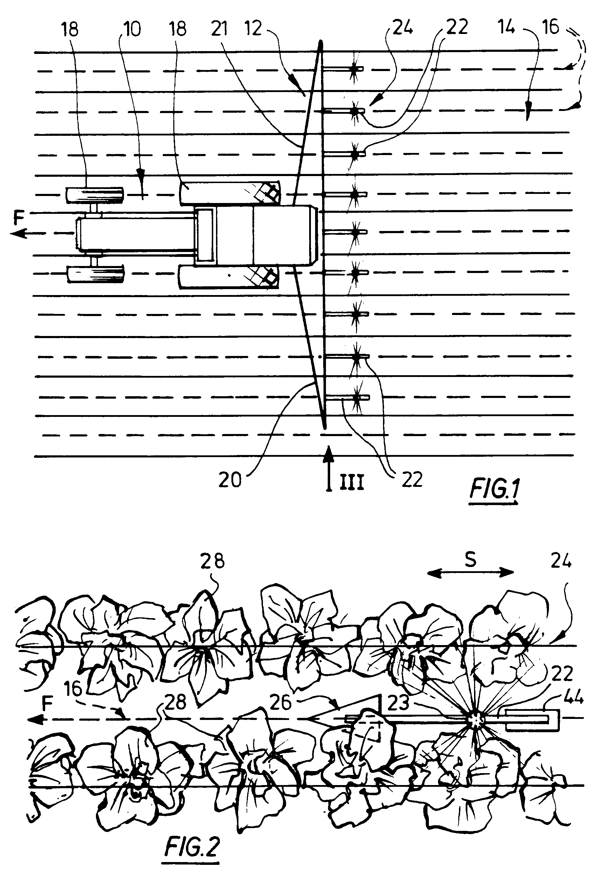

As indicated above, the disclosure in WO92/00670 is of upwardly or horizontally directed sprays from between the crop rows, with the principal spray directions being laterally outwardly from the generally central location between the rows. This is indicated in Fig 2 of the drawings hereof.

It has been found that such an arrangement is more susceptible to variations in spraying effectiveness with respect to ground speed, than could be desired. Accordingly, improvements in this latter regard, or generally, are desirable, and an object of this aspect of the present invention is to provide one or more such improvements.

In a preferred embodiment, the direction of spraying from the dropleg is generally lengthwise of the crop rows, with respect to the direction F of normal forward movement of the apparatus and forwards.

By the provision of a lengthwise spraying direction with respect to the crop rows it has been found, surprisingly, that significant improvements in spraying performance are achieved.

### ROW FOLLOWING

The carriage system of row following disclosed in WO92/00670 has been found to be effective in terms of its ability to accommodate row wander without the necessity for steering action by the driver of the tractor hauling the sprayer, but improvements have been shown to be desirable in relation to the actual row-following capabilities of the carriages, and an object of this aspect of the present invention is to provide improvements in this respect.

In a preferred embodiment, dropleg which effect crop spraying are mounted on carriages capable of moving lengthwise of the spray boom, and power operated means is provided to move the carriages lengthwise of the boom.

Control of the drive system for the carriages is provided by mechanical sensing means, such as the droplegs themselves, which are responsive to forces exerted thereon resulting from row wander, whereby a response signal is generated to effect powered carriage movement whereby the sensor or dropleg becomes centrally located with respect to the row. Response signals for this purpose may be generated by potentiometers connected to the droplegs. Power for the carriages may be provided by electric motors driving the carriages provided on the rail system extending lengthwise of the boom, as disclosed in WO92/00670.

Embodiments of the invention will now be described by way of example with reference to the accompanying drawings in which :
Fig 1 shows a plan view of a tractor and sprayer working in a row crop;
Fig 2, shows, on a larger scale, an individual dropleg of the sprayer of Fig 1 passing between two crop rows while it sprays;
Fig 3 shows a side elevation view of a boom of the sprayer of Fig 1, and with a dropleg shown below it;
Figs 4 and 5 show an alternative boom and dropleg configuration shown with the dropleg in its normal working configuration and a breakback configuration;
Fig 6 shows a universal joint mounting for the droplegs of the preceding figures, indicating the axes of movement, potentiometers producing signals from such movement, and an associated control circuit;
Fig 6A shows a wavy-washer cam and spring assembly for use in the joint assembly of Fig 6;
Fig 7 indicates the direction of dropleg movement for tilt and height sensing; and
Fig 8 shows a front elevation view of a dropleg mounted below the boom, and indicating the direction of pivotable movement for row-following functions;
Fig 9 shows a rear elevation view of the inner ends of the two boom portions and an associated control and lift linkage;
Fig 10 shows a part of the apparatus of Fig 9 indicated diagrammatically; and
Figs 11 and 12 show details of a modification of the assembly of Figs 9 and 10.

As shown in Figs 1 and 2, a tractor 10 is drawing spraying apparatus 12 to spray a potato crop 14 in which there are valleys 16 between successive ridges in the earthed-up row crop. The tractor runs with its wheels 18 in these valleys.

The spraying apparatus 12 comprises boom portions 20 and 21 extending laterally over the crop rows. Mounted on the boom portions are droplegs 22 having spray nozzles 23 in the region of their lower ends so as to effect a spraying action as indicated at 24 in Figs 1 and 2.

As shown in Fig 2, a forwardly extending separator element 26 is provided in front of each of the droplegs 22 to divide a path through the leaves 28 of the potato crop, thereby enabling the dropleg to pass through the foliage without causing damage. The spray nozzle 23 which produces the spray 24 is positioned in the correct location on arm 22 to spray the undersides of foliage by means of a horizontally and/or vertically spray pattern as indicated at 24. For further details, reference is directed to WO92/00670.

In Fig 3 there is shown an end elevation view of boom portion 20 with an alternative form of dropleg 30 mounted on a carriage 32 and having a spray nozzle 34, generally as disclosed in WO92/00670. Carriage 32 runs on tracks or rails 36, 38 by means of wheels 40, 42. The wheels are driven by an electric motor 44, for example a stepping motor. A cable drive may be provided from one directly driven wheel of the carriage to the other wheels.

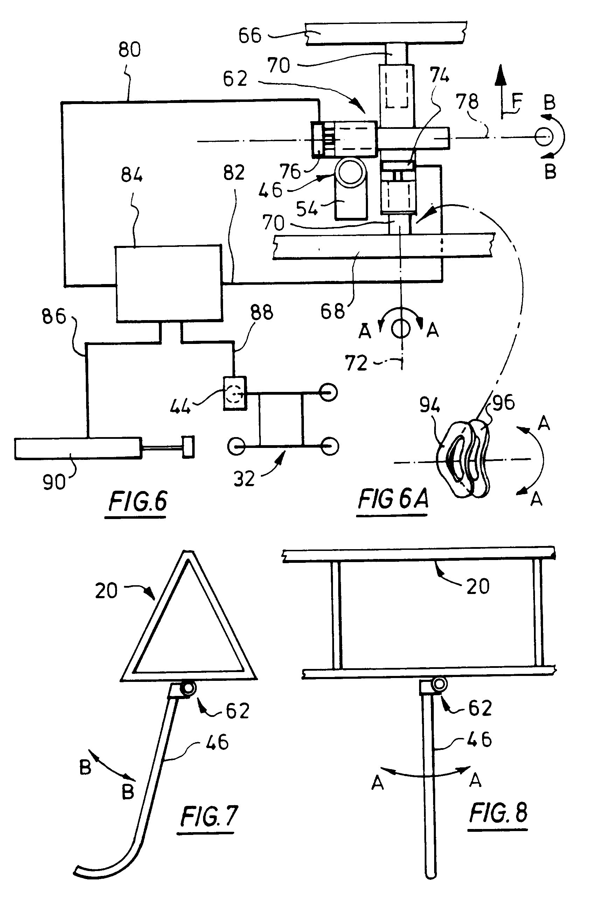

Figs 4 and 5 show a breakback arrangement for the droplegs.

As shown in Fig 4, a preferred form of dropleg 46 comprises a generally linear upper portion 48, and a lower portion 50 having a linear portion 52 and a rearwardly curved portion 54, which extends slightly upwards at its trailing end 56.

Intermediate the upper and lower portions 48, 50 of dropleg 46 is a hinge assembly 58 adapted to open in the direction shown in Fig 5, and biased in the closing direction by a spring 60.

In Figs 4 and 5, the mounting of the upper end of dropleg 46 on boom portion 20 is through a carriage (not shown) generally in a manner similar to that seen in Fig 3. This simplification has been adopted for reasons of economy of illustration.

There is shown in Figs 4 and 5 a universal joint 62 to be more fully described above in relation to Figs 6 to 8. Included in this latter mounting will be described a height and tilt sensing arrangement. There is shown at 64 in Figs 4 and 5 a sector of 5 degrees initial movement which occurs before a signal is generated for height and tilt sensing purposes.

Turning now to Figs 6, 6A, 7 and 8, Fig 7 corresponds to Fig 4, and shows the direction B-B of tilt and height sensing movement of dropleg 46. This angular movement B-B can also be seen in Fig 6 in relation to the universal joint 62.

In Fig 6, opposite sides of boom portion 20 are shown at 66 and 68. Cross-shaft 70 defines axis 72 for side-to-side row following angular movement of dropleg 46. A potentiometer 74 provides a signal proportional to the degree of row-following angular movement A-A. Likewise a potentiometer 76 provides a corresponding signal in relation to angular movement about axis 78 as a measure of tilt and height sensing in the direction B-B. These signals are fed by conductors, 80, 82 to a comparator/controller 84 which has output conductors 86, 88 controlling an electric ram 90 and carriage motor 44.

There is shown in Fig 6A a cam assembly 92 comprising spring biased wavy washers 94, 96 to be mounted on cross-shaft 70 to a define a preferred position for dropleg 46 in the attitude shown in Fig 8, but permitting lateral row-following movement in the direction A-A, and permitting also corresponding movement in the direction A-A when the boom 20 is folded for transport and the droplegs, under their own weight, pivot to a transport position. The central position of Fig 8 is maintained as a preferred position by the spring-biased washers.

Height signals in the direction B-B enable controller 84 to actuate ram 90 accordingly, as will be more fully described below. Signals are in fact taken from two droplegs 46 at spaced positions on boom portions 20, 21, and the controller compares these to determine whether any lifting or lowering action is needed, and if so whether the boom requires equal movement at both ends, or a tilting action. If the former, then the entire boom is raised on a parallelogram linkage (not shown) extending between a headstock mounted on the draft links of tractor 10, and connected at its rear end to the boom portions 20, 21. If a tilting action is required, then ram 90 is actuated.

So far as row following is concerned, if dropleg 46 is not in proper alignment with a crop row, the thus, generated laterally-directed force causes angular movement in direction A-A of the dropleg, and this generates a signal to motor 44 on carriage 32 to move the carriage in the direction so as to restore dropleg 46 to its central position between the crop rows.

So far as spraying is concerned, the spray nozzles on the droplegs may spray in the generally lateral direction indicated at 24 in Figs 1 and 2. However, it is preferred to spray in the direction S seen in Fig 2 ie in the direction of normal forward motion F of the droplegs.

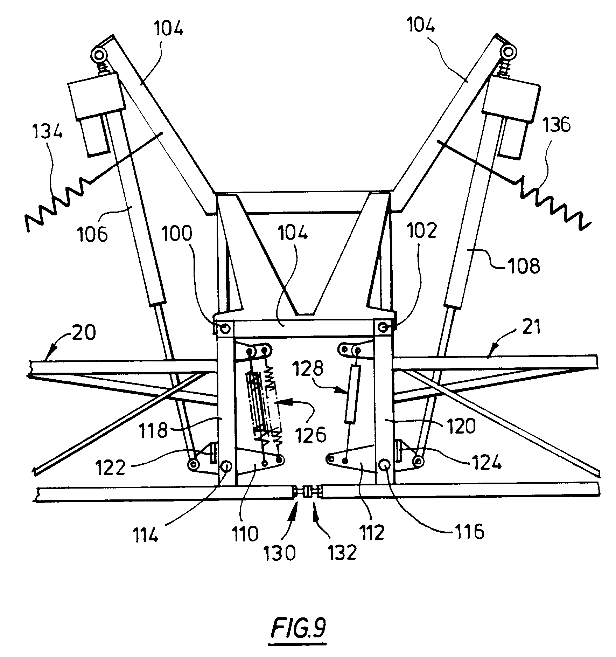

Turning now to the boom mounting and control systems shown in Figs 9 to 12, these are applicable to any kind of agricultural or horticultural boom type apparatus.

As shown in the drawings, boom portions 20, 21 are mounted on tractor 10 through respective main pivots 100, 102 having fore/aft axes. The pivots are mounted on a frame 104 located at the rearward end of the parallelogram linkage (not shown) on which the entire boom assembly is mounted for vertical movement under tractor control. A pair of electrical actuators 106, 108 act between frame 104 and levers 110, 112 pivotally mounted at 114, 116, respectively, on the inner ends 118, 120 of boom portions 20 and 21 respectively.

Levers 110 and 112 have stop plates 122, 124 to contact the ends 118, 120 after a predetermined amount of lost motion.

Acting between the inner ends of levers 110, 112 and frame 104 are a spring assembly 126 and a hydraulic damper 128.

Boom portions 20, 21 have projecting abutment means 130, 132 which make face-to-face engagement and frictional contact, as shown in Fig 9.

Spring assembly 126 is a combined tension and compression string assembly with an associated damper, whereby both clockwise and anticlockwise moments are applied to lever 110 are resiliently resisted, and rapid movements of the lever are damped. It is to be noted that the right hand boom 21 has only an hydraulic damper 128 to damp movement of lever 112.

The weight of boom portions 20 and 21 is partially offset by tension springs 134 and 136.

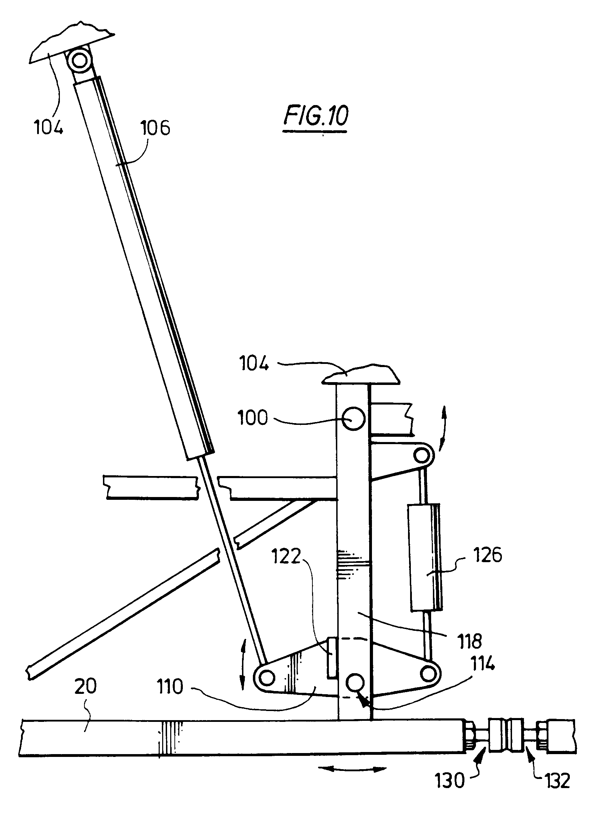

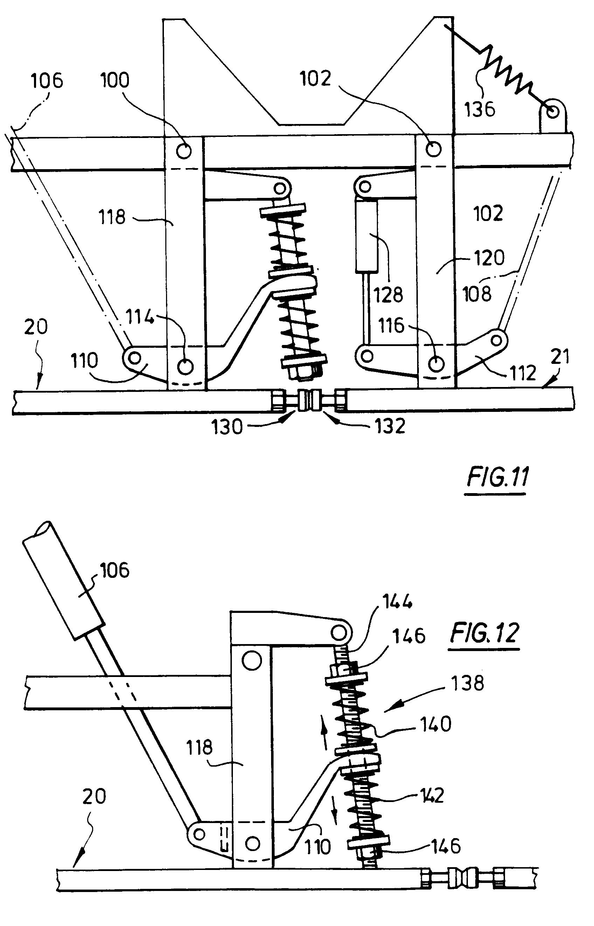

In the embodiments of Figs 11 and 12, parts corresponding to those of Figs 9 and 10 are given the same reference numerals. In this embodiment, the spring assembly 126 is in the form of a twin coil spring assembly 138 with lever 110 connected between springs 140, 142, and these springs being adjustably mounted on a threaded lengthwise rod 144, and nuts 146 being provided to adjust spring loading.

Operation will now be described.

Boom portions 20 and 21 are raised for transport by energising actuators 106, 108 in the retraction direction. Stop plates 122, 124 engage ends 118, 120 of the boom portions and direct lift occurs about pivots 100, 102, for transport purposes. On recommencing work, actuators 106 and 108 are re-extended until the stop plates 122, 124 are clear of the boom end 118, 120.

Then, before commencing spraying, the boom is levelled with respect to the ground by extending or retracting actuator 106. Such thrust is transmitted to the boom portion 20 by virtue of the spring assembly 126, causing the boom portion to tilt. This adjustment is carried out manually until the required levelling has been achieved. A corresponding movement is transmitted through abutment means 130, 132 to boom portion 21, which is likewise levelled.

Spraying can then commence. Signals from the height-sensing droplegs are communicated to controller 84 and ram 90 (corresponding to ram 106) is energised accordingly to maintain constant boom height and attitude. Carriage 32 is moved as necessary by motor 44 to maintain the droplegs centrally between the crop rows. If the signals from the two sensing droplegs indicate that an overall increase or reduction of boom height, this is effected by raising or lowering the main parallelogram linkage.

During spraying, tractor movements, particularly rapid ones caused by the terrain are not permitted to affect the pre-set constant height and attitude of the boom 20, 21. This latter is maintained by the movement absorbtion characteristics of the spring assembly 126 and the damping effect of abutments 130, 132 and the hydraulic damper 128.

Amongst other modifications which could be made in the above embodiments are the following :
1 The use of a paddle element on the droplegs to enable same to sense height from the top of a crop to be sprayed.
2 The use of telescopic droplegs to accommodate differing crop heights.
3 The mounting of the controlled-size droplet generation apparatus within the tubular structure of the droplegs.
4 The reduction in tank size for the spraying liquid where controlled droplet size apparatus is used. The overall volume of liquid required may be as low as 1/20 of that normally required.
5 The use of one or more droplegs per drivable carriage on the boom.
6 The use of dropleg articulation and carriage drive and cam-location in non height-and-tilt sensing droplegs.

## Claims

1. A method of controlling the height from the ground of an agricultural or horticultural boom-type implement (12) comprising :
a) providing height sensing means (12, 30, 46) at at least one location on said boom (20, 21);
b) causing said height sensing means to generate height signals;
c) using said height signals to control the height of the boom at at least said one location;
d) said height sensing means comprising a sensor (22, 30, 46) mounted on the boom (20, 21) to contact the soil surface and operate actuating means (90, 106) to control boom height;
characterised by
e) providing said sensor comprising a dropleg mounted on said boom to depend therefrom and adapted to engage the ground, and providing signalling means (74, 76) connected to said dropleg;
f) mounting said dropleg on said boom for up and down movement of its lower end by angular movement about an axis extending generally lengthwise of the boom; and
g) causing said signalling means (74, 76) to generate boom height control signals upon said angular movement of said dropleg.

2. Apparatus for controlling the height from the ground of an agricultural or horticultural boom-type implement (12) comprising :
a) height sensing means (12, 30, 46) to be mounted at at least one location on said boom (20, 21), said height sensing means being adapted to generate height control signals for controlling the height of the boom at at least said one location;
b) said height sensing means comprising a sensor (22, 30, 46) mounted on the boom (20, 21) to contact the soil surface and adapted to operate actuating means (90, 106) to control boom height;
characterised by
c) said sensor comprising a dropleg (22, 30, 46) adapted to be mounted on said boom to depend therefrom and adapted to engage the ground; and
d) said sensor being adapted to operate actuating means by signalling means (74, 76) connected to said dropleg to generate said boom height control signals;
e) said dropleg being adapted to be mounted on said boom for up and down movement of its lower end by angular movement about an axis extending generally lengthwise of the boom; and
f) said signalling means (74, 76) being adapted to generate said boom height control signals upon said angular movement of said dropleg.

3. Apparatus according to claim 2 characterised by said boom (20, 21) being a spraying or spreading boom and having droplegs (22, 30, 46) mounted thereon to effect spraying or spreading between crop rows, and said sensor dropleg having spraying or spreading means (34) mounted thereon.

4. Apparatus according to claim 2 or claim 3 characterised by a second sensor dropleg (46) and signalling means (74, 76) to sense boom height at a location spaced from said first dropleg, and comparator means (84) being operative to signal to actuate a boom tilt mechanism (106) upon detecting a height difference.

5. Apparatus according to any one of claims 2 to 4 characterised by said dropleg (46) being mounted on said boom (20, 21) for lateral turning movement about a generally fore/aft axis (A-A) in response to non-alignment of said dropleg (46) with the central region between successive crop rows in use, and signalling means (74) being connected to said dropleg to signal such turning movement to enable responsive action to be taken.

6. Apparatus according to claim 5 characterised by said dropleg (46) being mounted on powered driven carriage means (32) for movement lengthwise of said boom (20, 21) and said turning movement signal being arranged to cause actuation of said carriage drive (44) in a direction to centralise said dropleg with respect to said crop rows.

7. Apparatus according to claim 5 or claim 6 characterised by cam means (94, 96) acting between said dropleg (46) and its mounting (70) to permit said turning movement (A-A) about said generally fore/aft axis for row following and movement to a transport position, on each side of a preferred central position.

8. Apparatus according to any one of claims 5 to 7 characterised by said dropleg being a spraying or spreading dropleg not providing only a boom height sensing function.

9. Apparatus according to any one of claims 2 to 8 characterised by said dropleg (46) being articulated between its ends to permit breakback on reversing movement of the boom (20, 21) with respect to the ground.

10. Apparatus according to any one of claims 2 to 9 characterised by said dropleg being adapted to engage the ground directly at said lower end of said dropleg.

11. An agricultural or horticultural boom-type implement comprising two boom portions (20, 21), pivot means (100, 102) to permit up and down movement of said boom portions, and apparatus for controlling the height from the ground of said boom portions, as defined in any one of claims 2 to 10, characterised by abutment means (130, 132) at the inner ends of said boom portions whereby said portions make direct abutting engagement, and the location of said abutment means being such that said up and down movement of one of said boom portions about its pivot means causes transmission of corresponding movement through the abutment means to the other of said boom portions.

12. A method of spraying row crops comprising providing a boom-type agricultural or horticultural spraying implement and controlling the height from the ground of the boom (20, 21) of said implement in accordance with the method of claim 1, said dropleg (22, 30, 46) being a spraying dropleg having spray apparatus to spray crop rows from between the rows, and the method further comprising causing the direction of spraying from said dropleg to be generally lengthwise of the crop rows and forwards with respect to the direction of travel of the spraying apparatus.

13. A method according to claim 1 or claim 12 characterised by causing said sensor dropleg to engage the ground directly at said lower end of said dropleg.

## Patentansprüche

1. Verfahren zum Steuern der Höhe gegenüber Grund eines landwirtschaftlichen oder gartenbaulichen Auslegergerätes (12) mit:
a) Bereitstellen von Höhensensormitteln (12, 30, 46) an mindestens einer Stelle des Auslegers (20, 21);
b) Steuern der Höhensensormittel zum Erzeugen von Höhensignalen;
c) Verwenden der Höhensignale zum Steuern der Auslegerhöhe an mindestens einer Stelle;
d) wobei die Höhensensormittel einen am Ausleger (20, 21) befestigten Sensor (22, 30, 46) enthalten zum Berühren der Bodenoberfläche und zum Betätigen von Antriebsmitteln (90, 106) zum Steuern der Auslegerhöhe,
**gekennzeichnet durch**
e) Bereitstellen des Sensors mit einem am Ausleger befestigten und abwärts ragenden Klapparm, welcher zum Eingriff mit dem Boden geeignet ist, und Bereitstellen von mit dem Klapparm verbundenen Signalisiermitteln (74, 76) ;
f) Befestigen des Klapparms am Ausleger zwecks Auf- und Abwärtsbewegung seines unteren Endes mittels Winkelbewegung um eine weitgehend längs des Auslegers verlaufende Achse; und
g) Steuern der Signalisiermittel (74, 76) zum Erzeugen von Auslegerhöhensteuersignalen auf die Winkelbewegung des Klapparms hin.

2. Vorrichtung zum Steuern der Höhe gegenüber Grund eines landwirtschaftlichen oder gartenbaulichen Auslegergerätes (12) mit :
a) an mindestens einer Stelle des Auslegers (20, 21) befestigten Höhensensormitteln (12, 30, 46), welche zum Erzeugen von Höhensteuersignalen zwecks Steuerung der Auslegerhöhe an der mindestens einen Stelle geeignet sind;
b) wobei die Höhensensormittel einen am Ausleger (20, 21) befestigten Sensor (22, 30, 46) enthalten, welcher zum Berühren der Bodenoberfläche und zum Betätigen von Antriebsmitteln (90, 106) zum Steuern der Auslegerhöhe geeignet ist,
**dadurch gekennzeichnet, daß**
c) der Sensor einen Klapparm (22, 30, 46) enthält, welcher zum vom Ausleger abwärts ragenden Befestigen und zum Eingriff mit dem Boden geeignet ist; und
d) der Sensor zum Betätigen von Antriebsmitteln durch Signalisiermittel (74, 76) geeignet ist, welche zum Erzeugen der Auslegerhöhensteuersignale mit dem Klapparm verbunden sind;
e) der Klapparm zum Befestigen am Ausleger zwecks Auf- und Abwärtsbewegung seines unteren Endes mittels Winkelbewegung um eine weitgehend längs des Auslegers verlaufende Achse geeignet ist; und
f) die Signalisiermittel (74, 76) zum Erzeugen von Auslegerhöhensteuersignalen auf die Winkelbewegung des Klapparms hin geeignet sind.

3. Vorrichtung nach Anspruch 2, dadurch **gekennzeichnet**, daß der Ausleger (20, 21) ein Sprüh- oder Streuausleger ist und an diesem befestigte Klapparme (22, 30, 46) zum Besprühen oder Streuen zwischen Pflanzenreihen hat, wobei der Sensor-Klapparm an ihm befestigte Sprüh- oder Streumittel (34) hat.

4. Vorrichtung nach Anspruch 2 oder 3, **gekennzeichnet**, durch einen zweiten Sensor-Klapparm (46) und Signalisiermittel (74, 76) zum Erfassen der Auslegerhöhe an einer von dem ersten Klapparm beabstandeten Stelle, und durch Vergleichsmittel (84) zum signalabhängigen Betätigen eines Ausleger-Kippmechanismus' (106) bei Erfassen eines Höhenunterschiedes.

5. Vorrichtung nach einem der Ansprüche 2 bis 4, dadurch **gekennzeichnet**, daß der Klapparm (46) am Ausleger (20, 21) zur seitlichen Drehbewegung um eine Längsachse (A-A) in Reaktion auf Nicht-Ausrichtung des Klapparms (46) auf den zentralen Bereich zwischen aufeinanderfolgende Pflanzenreihen in Bearbeitung befestigt ist, und daß Signalisiermittel (74) mit dem Klapparm zum Signalisieren einer solchen Drehbewegung verbunden sind, um daraufhin eine Reaktion zu ermöglichen.

6. Vorrichtung nach Anspruch 5, dadurch **gekennzeichnet**, daß der Klapparm (46) an einem angetriebenen Schlitten (32) zur Bewegung längs des Auslegers (20, 21) befestigt ist, und daß das Drehbewegungssignal zum Steuern des Schlittenantriebs (44) in eine Richtung zwecks Zentrierung des Klapparms bezogen auf die Pflanzenreihen geeignet ist.

7. Vorrichtung nach Anspruch 5 oder 6, **gekennzeichnet** durch zwischen dem Klapparm (46) und seiner Befestigung (70) einwirkende Nocken (94, 96), um die Drehbewegung (A-A) um die Längsachse zur Reihenbewegung und zum Bewegen auf eine Transportposition beiderseits einer bevorzugten zentralen Position zu gestatten.

8. Vorrichtung nach einem der Ansprüche 5 bis 7, dadurch **gekennzeichnet**, daß der Klapparm ein Sprüh- oder Streuklapparm ist, welcher nicht nur eine Auslegerhöhensensorfunktion vorsieht.

9. Vorrichtung nach einem der Ansprüche 2 bis 8, dadurch **gekennzeichnet** daß der Klapparm (46) zwischen seinen Enden gelenkig ist, um bei Umkehrbewegung des Auslegers (20, 21) bezogen auf den Boden das Rückklappen zu ermöglichen.

10. Vorrichtung nach einem der Ansprüche 2 bis 9, dadurch **gekennzeichnet** daß der Klapparm unmittelbar an seinem unteren Ende zum Eingriff mit dem Boden geeignet ist.

11. Landwirtschaftliches oder gartenbauliches Auslegergerät mit zwei Auslegerabschnitten (20, 21), Schwenkmitteln (100, 102) zum Auf- und Abwärtsbewegen der Auslegerabschnitte, und einer Vorrichtung zum Steuern der Höhe der Auslegerabschnitte gegenüber Grund, gemäß einem der Ansprüche 2 bis 10, **gekennzeichnet** durch Anschlagmittel (130, 132) an den inneren Enden der Auslegerabschnitte, wodurch die Abschnitte direkt anschlagen, und wobei die Lage der Anschlagmittel derart ist, daß die Auf- und Abwärtsbewegung des einen der Auslegerabschnitte um dessen Schwenkmittel die Übertragung der entsprechenden Bewegung über die Anschlagmittel auf den anderen Auslegerabschnitt bewirkt.

12. Verfahren zum Besprühen von Reihenkulturen mit einem auslegerartigen landwirtschaftlichen oder gartenbaulichen Sprühgerät und zum Steuern der Höhe gegenüber Grund des Auslegergerätes (20, 21) nach Anspruch 1, wobei der Klapparm (22, 30, 46) ein Sprühklapparm mit einer Sprühvorrichtung zum Besprühen von Pflanzenreihen aus den Reihenzwischenräumen ist, und die Sprührichtung des Klapparms als weitgehend längs der Pflanzenreihen und vorwärts, bezogen auf die Fahrtrichtung der Sprühvorrichtung, gesteuert wird.

13. Verfahren nach Anspruch 1 oder 12, dadurch **gekennzeichnet**, daß der Sensor-Klapparm unmittelbar an seinem unteren Ende mit dem Boden in Eingriff gebracht wird.

## Revendications

1. Procédé de réglage de la hauteur par rapport au sol d'un accessoire agricole ou horticole du type à flèche (12), comprenant :
(a) l'installation de moyens de détection de hauteur (12,30,46) à au moins un endroit sur ladite flèche (20,21) ;
(b) l'activation desdits moyens de détection de hauteur pour engendrer des signaux de hauteur ;
(c) l'utilisation desdits signaux de hauteur pour régler la hauteur de la flèche à au moins ledit un endroit ;
(d) lesdits moyens de détection de hauteur comprenant un détecteur (22,30,46) monté sur la flèche (20,21) pour venir en contact avec la surface du sol et actionner des moyens de manoeuvre (90,106) afin de régler la hauteur de la flèche ;
caractérisé par :
(e) la réalisation dudit détecteur comprenant une jambe tombante montée sur ladite flèche de manière à pendre à partir de celle-ci et prévue pour venir en contact avec le sol, et l'installation de moyens de fourniture de signal (74,76) connectés à ladite jambe tombante ;
(f) le montage de ladite jambe tombante sur ladite flèche pour un mouvement vers le haut et le bas de son extrémité inférieure suivant un mouvement angulaire autour d'un axe s'étendant sensiblement dans la direction longitudinale de la flèche ; et
(g) l'activation desdits moyens de fourniture de signal (74,76) pour engendrer des signaux de commande de hauteur de flèche lors dudit mouvement angulaire de ladite jambe tombante.

2. Appareil pour le réglage de la hauteur par rapport au sol d'un accessoire agricole ou horticole du type à flèche (12), comprenant :
(a) des moyens de détection de hauteur (12, 30,46) à monter à au moins un endroit sur ladite flèche (20,21), lesdits moyens de détection de hauteur étant prévus pour engendrer des signaux de réglage de hauteur afin de régler la hauteur de la flèche à au moins ledit un endroit ;
(b) lesdits moyens de détection de hauteur comportant un détecteur (22,30,46) monté sur la flèche (20,21) pour venir en contact avec la surface du sol et prévu pour actionner des moyens de manoeuvre (90,106) afin de régler la hauteur de la flèche ;
caractérisé en ce que :
(c) ledit détecteur comprend une jambe tombante (22,30,46) prévue pour montage sur ladite flèche de façon à pendre à partir de celle-ci, et prévue pour venir en contact avec le sol ; et
(d) ledit détecteur est prévu pour actionner des moyens de manoeuvre par des moyens de fourniture de signal (74,76) connectés à ladite jambe tombante afin d'engendrer lesdits signaux de réglage de hauteur de flèche ;
(e) ladite jambe tombante est prévue pour montage sur ladite flèche pour un mouvement vers le haut et le bas de son extrémité inférieure suivant un mouvement angulaire autour d'un axe s'étendant sensiblement dans la direction longitudinale de la flèche ; et
(f) lesdits moyens de fourniture de signal (74,76) sont prévus pour engendrer lesdits signaux de réglage de hauteur de flèche lors dudit mouvement angulaire de ladite jambe tombante.

3. Appareil selon la revendication 2, caractérisé en ce que ladite flèche (20,21) est une flèche de pulvérisation ou d'épandage sur laquelle sont montées des jambes tombantes (22,30,46) pour effectuer une pulvérisation ou un épandage entre des rangées de culture,et ladite jambe tombante de détecteur comporte des moyens de pulvérisation ou d'épandage (34) montés sur elle-même.

4. Appareil selon la revendication 2 ou la revendication 3, caractérisé par une deuxième jambe tombante de détecteur (46) et des deuxièmes moyens de fourniture de signal (74,75) pour détecter la hauteur de la flèche à un endroit espacé de ladite première jambe tombante, et des moyens de comparaison (84) sensibles au signal pour actionner un mécanisme d'inclinaison de flèche (106) lors de la détection d'une différence de hauteur.

5. Appareil selon une quelconque des revendications 2 à 4, caractérisé en ce que ladite jambe tombante (46) est montée sur ladite flèche (20,21) pour un mouvement de pivotement latéral autour d'un axe sensiblement avant/arrière (A-A) en réponse au non alignement de ladite jambe tombante (46) avec la région centrale entre des rangées de culture successives en utilisation, et des moyens de fourniture de signal (74) sont connectés à ladite jambe tombante pour signaler ce mouvement de pivotement afin de permettre d'effectuer une action en réponse.

6. Appareil selon la revendication 5, caractérisé en ce que ladite jambe tombante (46) est montée sur un chariot motorisé (32) pour un mouvement dans la direction longitudinale de ladite flèche (20,21), et ledit signal de mouvement de pivotement est prévu pour provoquer l'activation de l'entraînement (44) dudit chariot dans une direction de centrage de ladite jambe tombante par rapport aux dites rangées de ladite culture.

7. Appareil selon la revendication 5 ou la revendication 6, caractérisé en ce qu'il comprend des moyens à came (94,96) agissant entre ladite jambe tombante (46) et sa fixation (70) pour permettre ledit mouvement de pivotement (A-A) autour dudit axe sensiblement avant/arrière pour le suivi des rangées et un mouvement à une position de transport, de chaque côté d'une position centrale préférée.

8. Appareil selon une quelconque des revendications 5 à 7, caractérisé en en ce que ladite jambe tombante est une jambe tombante de pulvérisation ou d'épandage ne remplissant pas seulement une fonction de détection de hauteur de flèche.

9. Appareil selon une quelconque des revendications 2 à 8, caractérisé en ce que ladite jambe tombante (46) est articulée entre ses extrémités pour permettre un effacement en arrière lors d'un mouvement de marche arrière de la flèche (20,21) par rapport au sol.

10. Appareil selon une quelconque des revendications 2 à 9, caractérisé en ce que ladite jambe tombante est prévue pour venir en contact avec le sol directement à ladite extrémité inférieure de ladite jambe tombante.

11. Accessoire agricole ou horticole du type à flèche comprenant deux parties de flèche (20,21), des moyens de pivotement (100,102) pour permettre un mouvement de montée et de descente desdites parties de flèche , et un appareil de réglage de la hauteur desdites parties de flèche par rapport au sol, selon une quelconque des revendications 2 à 10, caractérisé en ce que des moyens de butée (130,132) sont prévus aux extrémités intérieures desdites parties de flèche de sorte que les dites parties viennent en contact de butée direct, et la position desdits moyens de butée est telle que ledit mouvement de montée et de descente d'une desdites parties de flèche autour de ses moyens de pivotement provoque la transmission d'un mouvement correspondant, par l'intermédiaire des moyens de butée, à l'autre desdites parties de flèche.

12. Procédé de traitement de cultures en rangées par pulvérisation, comprenant l'utilisation d'un accessoire de pulvérisation agricole ou horticole du type à flèche et le réglage de la hauteur par rapport au sol de la flèche (20,21) dudit accessoire selon le procédé de la revendication 1, ladite jambe tombante (22,30,46) étant une jambe tombante de pulvérisation pourvue d'un dispositif de pulvérisation afin de traiter les rangées de culture par pulvérisation à partir de la région située entre les rangées, et le procédé comprend en outre l'orientation de la pulvérisation,à partir de ladite jambe tombante,dans une direction sensiblement longitudinale des rangées de culture et vers l'avant par rapport à la direction de déplacement du dispositif de pulvérisation.

13. Procédé selon la revendication 1 ou la revendication 12, caractérisé en ce que ladite jambe tombante de détecteur rencontre le sol directement à ladite extrémité inférieure de ladite jambe tombante.
